(19) Europäisches Patentamt
European Patent Office
Office européen des brevets

(11) Veröffentlichungsnummer: **0 226 153 B1**

(12) **EUROPÄISCHE PATENTSCHRIFT**

(45) Veröffentlichungstag der Patentschrift: **12.08.92**

(51) Int. Cl.$^5$: **C08F 8/00**, C08C 19/00, G03F 7/00

(21) Anmeldenummer: **86116992.8**

(22) Anmeldetag: **06.12.86**

Die Akte enthält technische Angaben, die nach dem Eingang der Anmeldung eingereicht wurden und die nicht in dieser Patentschrift enthalten sind.

(54) **Ionische Polymerisate.**

(30) Priorität: **11.12.85 DE 3543646**

(43) Veröffentlichungstag der Anmeldung:
**24.06.87 Patentblatt 87/26**

(45) Bekanntmachung des Hinweises auf die Patenterteilung:
**12.08.92 Patentblatt 92/33**

(84) Benannte Vertragsstaaten:
**CH DE FR GB IT LI NL SE**

(56) Entgegenhaltungen:
**EP-A- 0 029 094**
**US-A- 3 016 297**
**US-A- 3 974 129**

(73) Patentinhaber: **BASF Aktiengesellschaft**
**Carl-Bosch-Strasse 38**
**W-6700 Ludwigshafen(DE)**

(72) Erfinder: **Koch, Horst, Dr.**
**Schliffgasse 22**
**W-6711 Grosskarlbach(DE)**
Erfinder: **Mueller, Wolfgang F., Dr.**
**Im Biengarten 45**
**W-6730 Neustadt(DE)**
Erfinder: **Hofmann, Reiner, Dr.**
**Mandelbergstrasse 44**
**W-6730 Neustadt(DE)**
Erfinder: **Richter, Peter, Dr.**
**Bensheimer Ring 24**
**W-6710 Frankenthal(DE)**

EP 0 226 153 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung ionischer Polymerisate mit einer polymeren Hauptkette A, einem oder mehreren seitenständigen olefinisch ungesättigten Resten B und einem oder mehreren Kationen C, die verbesserte anwendungstechnische Eigenschaften aufweisen für die Herstellung von photovernetzbaren Druckplatten, Materplatten, Reliefplatten und Photoresists sowie von photovernetzten Druckformen, Materformen, Reliefformen und Photoresistmustern. Ferner betrifft die Erfindung photovernetzte Druckformen, Materformen, Reliefformen und Photoresistmuster, hergestellt unter Verwendung solcher ionischen Polymerisate.

Hier und im folgenden bezeichnet der Begriff "Platten" stets flächige Schichten aus nicht photovernetzten lichtempfindlichen Aufzeichnungsmaterialien, während die Begriffe "Formen" und "Muster" photovernetzte und entwickelte Aufzeichnungsmaterialien bezeichnen. Unter "lichtempfindlichen Aufzeichnungsmaterialien" wiederum sind die oben aufgeführten Platten und Photoresists und unter "Aufzeichnungsmaterialien" die photovernetzten, entwickelten Formen und Photoresistmuster zu verstehen.

Ionische Polymerisate der nachgenannten Art sind aus US-A-3 016 297 bekannt. Darin werden β-Ketomonocarbonsäureester von Polyestern auf der Basis von Polyolen beschrieben. Diese Polyester tragen seitenständige chelatisierende Gruppen. Bei Zugabe von mehrwertigen Metallkationen werden sie unter Einbeziehung der seitenständigen chelatisierenden Gruppen vernetzt. Diese Polyester können auch seitenständige Vinylidengruppen

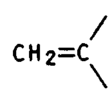

und - in der Kette - Vinylengruppen

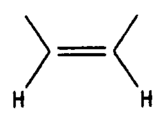

enthalten. Lichtempfindliche Aufzeichnungsmaterialien auf der Basis solcher Polyester sind aber nur mit Gemischen aus a) flüssigen chelatisierenden und üblichen organischen Lösungsmitteln und b) üblichen organischen Lösungsmitteln und sehr starken Säuren zu entwickeln, und sie müssen photopolymerisierbare Verbindungen enthalten. Beides schafft zahlreiche, heutzutage nicht mehr vertretbare Probleme bei der Verfahrenstechnik und der Entsorgung.

Aus JP-A-75/073 944 und JP-A-76/144 445 sind lichtempfindliche Aufzeichnungsmaterialien bekannt, die nichtionische Bindemittel, gebildet aus einem mit Glycidyl(meth)acrylat oder mit ω-Hydroxialkyl(meth)-acrylat teilveresterten maleinierten Polybutadien, photopolymerisierbare Verbindungen und Photoinitiatoren enthalten. Sie sind jedoch pastös und klebrig oder gar flüssig, und die darin enthaltenen photopolymerisierbaren Verbindungen schaffen wegen ihrer Toxizität Handhabungs- und Entsorgungsprobleme.

Der vorliegenden Erfindung lag die Aufgabe zugrunde, ionische Polymerisate zu finden, die fest, kautschukelastisch, nicht klebrig und sehr gut löslich in flüssigen basischen, insbesondere wäßrigen basischen Medien sind und die sich für die Herstellung von, gegebenenfalls monomerfreien, lichtempfindlichen Aufzeichnungsmaterialien eignen. Außerdem lag der Erfindung die Aufgabe zugrunde, neue, gegebenenfalls monomerfreie lichtempfindliche Aufzeichnungsmaterialien, die dimensionsstabil, nicht klebrig und nach ihrer bildmäßigen Belichtung mit flüssigen basischen, insbesondere wäßrigen basischen Medien entwickelbar sind, zu finden. Desweiteren lag der Erfindung die Aufgabe zugrunde, neue abriebfeste, dimensionsstabile lösungs- und ätzmittelbeständige Aufzeichnungsmaterialien zu finden.

Demgemäß wurden ionische Polymerisate mit einer polymeren Hauptkette A, einem oder mehreren seitenständigen olefinisch ungesättigten Resten B und einem oder mehreren Kationen C gefunden, worin

A) die polymere Hauptkette A gebildet wird von einem Alkadien-Polymerisat $A'$ eines zahlenmittleren Molgewichts $\overline{M}_n$ von 500 bis 20.000,

B) die durch 1. Maleinierung und 2. Teilveresterung oder Teilamidierung in $A'$ eingeführten Reste B, die Struktur (I) aufweisen,

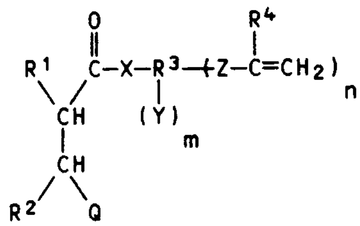

(I)

in denen $R^1$ und $R^2$ verschieden voneinander sind und ein Wasserstoffatom oder ein Kohlenstoffatom der Alkadienkette A′ darstellen, $R^3$ einen mehrwertigen, geradkettigen oder verzweigten aliphatischen Kohlenwasserstoffrest mit 1 bis 20 C-Atomen, dessen Kette oder Verzweigungen durch Sauerstoff-, Stickstoff- oder Schwefelatome unterbrochen sein können, X ein Sauerstoff- oder Schwefelatom oder eine Aminogruppe, Y eine polare Gruppe, m 0 oder eine ganze Zahl von 1 bis 5, n eine ganze Zahl von 1 bis 3, Z eine Methylen-, Ether-, Amid- oder Estergruppe, $R^4$ ein Wasserstoffatom oder eine Methylgruppe und Q eine Carboxy- oder eine Carboxylatgruppe darstellt,
und
C) die Kationen C Kationen von Elementen der I. bis V. Hauptgruppe, der I. bis VIII. Nebengruppe oder der Lanthanidenreihe des periodischen Systems der Elemente, von Ammoniak, von mehrfach funktionellen organischen Aminen und/oder von Hydrazin sind.

In einer vorteilhaften Ausführungsform enthalten die erfindungsgemäß verwendbaren Polymerisate neben (I) einen oder mehrere durch 1. Maleinierung und 2. Teilveresterung in A′ eingeführte Reste D der Struktur (II),

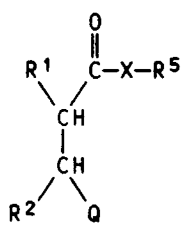

(II)

worin $R^5$ einen mindestens eine freie polare Gruppe enthaltenden, mehrwertigen, geradkettigen oder verzweigten aliphatischen Kohlenwasserstoffrest mit 1 bis 25 C-Atomen, dessen Kette und Verzweigungen durch Sauerstoff-, Stickstoff- oder Schwefelatome unterbrochen sein können, einen $\omega$-Hydroxi-poly(alkylenoxid)-$\alpha$-yl- oder einen $\omega$-Alkyl-poly(alkylenoxid)-$\alpha$-yl-Rest darstellt.

Vorteilhafte erfindungsgemäße ionische Polymerisate bestehen aus, bezogen auf ein Polymerisat,
45 bis 90,5, vorzugsweise 50 bis 80 und insbesondere 55 bis 70 Gew.-% an A,
9 bis 45, vorzugsweise 19,3 bis 42 und insbesondere 29 bis 41 Gew.-% an B und
0,5 bis 10, vorzugsweise 0,7 bis 8 und insbesondere 1 bis 4 Gew.-% an C.

Weitere vorteilhafte erfindungsgemäße ionische Polymerisate sind solche, die neben den oben angegebenen Mengen an A und C und neben 6 bis 25 Gew.-% B noch 3 bis 20 Gew.-% D enthalten.

Unter Periodischem System der Elemente ist das System von Mendelejew und Meyer zu verstehen, wie es z.B. im Lehrbuch "Anorganische Chemie" von F.A. Cotton und G. Wilkinson, Verlag Chemie, Weinheim, 1967, wiedergegeben ist.

Unter dem Begriff "polare Gruppen" sind Molekülreste zu verstehen, die zu Dipol-Dipol-, Dipol-Ion- oder Ion-Ion-Wechselwirkungen befähigt sind.

Der Begriff "flüssiges Medium" bezeichnet im Rahmen der Erfindung Lösungsmittel, Gemische aus Lösungsmitteln oder Lösungsmittel und deren Gemische, welche organische und/oder anorganische Zusatzstoffe enthalten.

Unter dem Begriff "flüssiges basisches Medium" sind dann Lösungsmittel, Gemische aus Lösungsmitteln oder organische und/oder anorganische Zusatzstoffe enthaltende Lösungsmittel und deren Gemische zu verstehen, die für sich selbst Elektronendonorwirkung besitzen oder Verbindungen mit Elektronendonorwirkung enthalten oder Hydroxylionen liefernde Verbindungen aufweisen.

Die erfindungsgemäßen ionischen Polymerisate sind fest, kautschukelastisch, nicht klebrig und hervorragend in flüssigen basischen, insbesondere wäßrigen basischen Medien löslich. Sie können nach der

Zugabe geeigneter verträglicher Zusatzstoffe durch Photopolymerisation vernetzt werden. Als besonderer überraschender Vorteil erweist sich dabei, daß eine Mitverwendung von photopolymerisierbaren Monomeren entfallen kann. Die erfindungsgemäßen Polymerisate eignen sich daher hervorragend für die Herstellung von gegebenenfalls monomerfreien, dimensionsstabilen, nicht klebrigen und sehr gut mit Hilfe der vorstehend genannten flüssigen Medien entwickelbaren lichtempfindlichen Aufzeichnungsmaterialien und von abriebfesten, dimensionsstabilen, lösungs- und ätzmittelbeständigen Aufzeichnungsmaterialien. Wegen der sehr guten Verträglichkeit der erfindungsgemäßen Polymerisate mit Zusatzstoffen, sind die lichtempfindlichen Aufzeichnungsmaterialien, die unter Verwendung solcher Polymerisate hergestellt wurden, transparent und ohne Schlieren. Sie besitzen deshalb hervorragende Belichtungseigenschaften und erlauben eine sehr detailgetreue Wiedergabe auch feinster Bildelemente. Die sehr gute Löslichkeitsdifferenzierung zwischen belichteten und unbelichteten Teilen auch monomerfreier lichtempfindlicher Aufzeichnungsmaterialien hat zur Folge, daß die Auswaschbedingungen ohne Bedenken verschärft werden können, so daß besonders gut ausgeprägte tiefe Formen und Muster erzeugt werden können. Hinzu kommt, daß bei Monomerfreiheit die üblicherweise auftretenden toxikologischen und anwendungstechnischen Probleme entfallen.

Die Aufzeichnungsmaterialien sind so flexibel, daß sie mehrfach auf kleine Druckzylinder aufgespannt werden können. Sie quellen auch kaum unter der Einwirkung wäßriger Druckfarben; sie sind dimensionsstabil und abriebfest. So erlauben sie auch bei hohen Druckauflagen eine sehr gute, auch in den feinsten Elementen exakte und vorlagentreue Bildreproduktion.

Geeignete Alkadien-Polymerisate A′, aus denen die Hauptkette A der erfindungsgemäßen ionischen Polymerisate gebildet wird, besitzen ein zahlenmittleres Molekulargewicht von $\overline{M}_n$ = 500 bis 20.000 (bestimmt durch Gelpermeationschromatographie in Toluol). Von Vorteil sind solche mit $\overline{M}_n$ = 500 bis 10.000; diese werden im allgemeinen als Oligomere bezeichnet. In Frage kommen: Oligobutadien, Oligoisopren, Oligocyclopentadien, Butadien-Isopren-Cooligomere, statistische Butadien-Styrol-Cooligomere, statistische Isopren-Styrol-Cooligomere, statistische Butadien-Acrylnitril-Cooligomere, statistische Butadien-(Meth)-Acrylat-Cooligomere, statistische Isopren-(Meth)Acrylat-Cooligomere, statistische Butadien-Maleinsäureanhydrid-Cooligomere, statistische Butadien-Styrol-(Meth)Acrylat-Teroligomere, statistische Butadien-Styrol-Cyclopentadien-Teroligomere, Styrol-Butadien-Zweiblockcooligomere, Styrol-Isopren-Zweiblockcooligomere, Styrol-Butadien-Styrol-Dreiblockcooligomere oder Styrol-Isopren-Styrol-Dreiblockcooligomere.

Die in den Oligomeren enthaltenen olefinischen Doppelbindungen können vollständig oder teilweise hydriert, halogeniert, hydrohalogeniert oder mit Mercaptoverbindungen umgesetzt sein. Es ist von Vorteil, wenn die olefinischen Doppelbindungen nur zum Teil und nicht vollständig umgesetzt sind.

Besonders vorteilhaft sind Butadienoligomere.

Geeignete Reste $R^3$ sind mehrwertige, geradkettige oder verzweigte aliphatische Kohlenwasserstoffreste mit 1 bis 20 C-Atomen, deren Kette oder Verzweigungen durch Sauerstoff-, Stickstoff- oder Schwefelatome unterbrochen sein können, z.B. die

Methylen-, $-CH_2-$ ,

Ethylen-, $-CH_2-CH_2-$ ,

Trimethylen-, $-CH_2-CH_2-CH_2-$ ,

Propan-1,2-diyl,

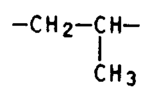 ,

Tetramethylen-, $-CH_2-CH_2-CH_2-CH_2-$ ,

2,2-Dimethylpropan-1,3-diyl,

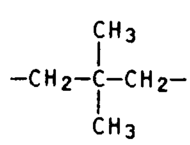 ,

Neopentan-tetrayl,

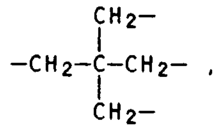

Propan-1,2,3-triyl,

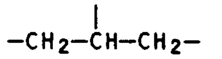

3-Thiapentan-1,5-diyl-, $-CH_2-CH_3-S-CH_2-CH_2-$ ,
3-Azapentan-1,5-diyl-, $-CH_2CH_2-NH-CH_2-CH_2-$ ,
Oligo(ethylenoxid)-α,ω-diyl- mit p = 1 bis 10, $-(CH_2CH_2O)_pCH_2CH_2-$ , oder die
4-Oxaheptan-1,2,6,7-tetrayl-Reste,

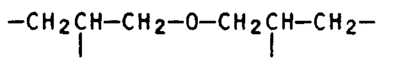

von denen die Ethylen, Tetramethylen- und die Propan-1,2,3-triyl-Reste bevorzugt sind.

Geeignete polare Gruppen Y sind z.B. Hydroxi-, Amino-, Thiolo-, Carbonsäure-, Phosphonsäure- oder Sulfonsäuregruppen, von denen die Hydroxigruppe bevorzugt ist.

Es ist von Vorteil, wenn X ein Sauerstoffatom und Z eine Ether- oder eine Estergruppe darstellt.

Geeignete Reste $R^5$ sind mindestens eine polare Gruppe enthaltende, mehrbindige, geradkettige oder verzweigte aliphatische Kohlenwasserstoffreste mit 1 bis 25 C-Atomen, deren Ketten oder Verzweigungen durch Sauerstoff-Stickstoff- oder Schwefelatome unterbrochen sein können, ω-Hydroxi-poly(alkylenoxid)-α-yl- oder ω-Alkyl-poly(alkylenoxid)-α-yl-Reste, z.B. die 2-Hydroxi-eth-1-yl-, 2-Amino-eth-1-yl-, 2-Thiolo-eth-1-yl, 2,3-Di-hydroxi-prop-1-yl-, 2,6,7-Trihydroxi-4-oxahept-1-yl-, 2-Sulfonsäure-eth-1-yl-, 2-Phosphonsäure-eth-1-yl-, 2-Carbonsäure-eth-1-yl-, ω-Hydroxi-poly(ethylenoxid)-α-yl- oder die ω-Methyl-poly(ethylenoxid)-α-yl-Reste.

Besonders vorteilhafte durch 1. Maleinierung und 2. Teilveresterung oder Teilamidierung in A′ eingeführte Reste B sind beispielsweise

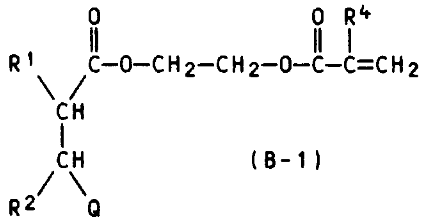

(B-1) ,

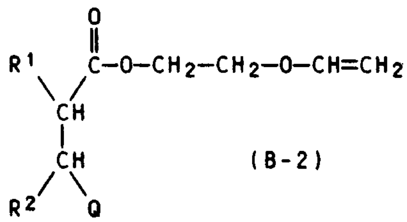

(B-2) ,

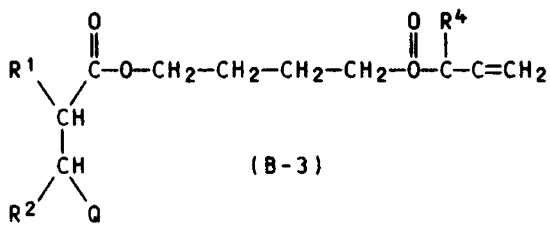

(B-3) ,

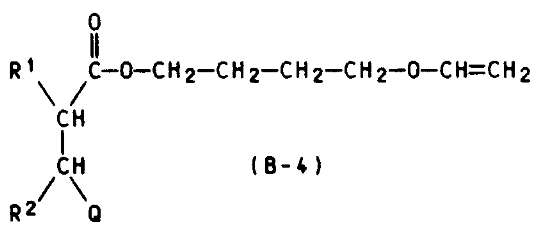

(B-4) ,

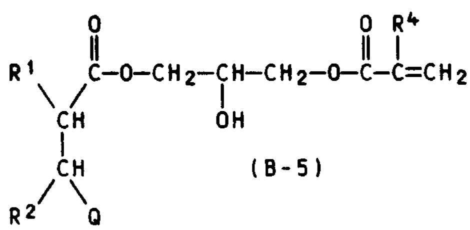

(B-5) ,

oder

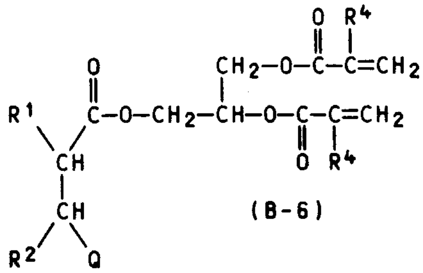

(B-6)

von denen die Reste B-1 und B-5 mit $R^4$ = Methyl sowie B-4 bevorzugt sind.

Geeignete Kationen C sind Kationen von Elementen der I. bis V. Hauptgruppe, der I. bis VIII. Nebengruppe sowie der Lanthanidenreihe des Periodischen Systems der Elemente, Kationen von Ammoniak, von mehrfachfunktionellen organischen Aminen und/oder von Hydrazin, z.B. Kationen der Elemente Li, Mg, Ca, Sr, Ba, Al, Ga, In, Ge, Sn, Pb, Sb, Bi, Zn, Cd, Hg, Cu, Sc, Y, La, der Lanthanidenreihe, Ti, Zr, Hf, V, Nb, Ta, Cr, Mo, W, Mn, Re, Fe, Co, Ni, Pd in Oxidationsstufen von 1 und höher;

$\overset{\oplus}{N}H_3CH_2CH_2\overset{\oplus}{N}H_3$ , $\overset{\oplus}{N}H_3CH_2CH_2CH_2\overset{\oplus}{N}H_3$ , $CH_3\overset{\oplus}{N}H_2CH_2CH_2\overset{\oplus}{N}H_2C_2H_5$ ,

$(CH_3)_2\overset{\oplus}{N}HCH_2CH_2CH_2\overset{\oplus}{N}H(CH_3)_2$ , $H_3\overset{\oplus}{N}CH_2CH_2NHCH_2CH_2-\overset{\oplus}{N}H_3$ ,

$H_3\overset{\oplus}{N}CH_2CH(\overset{\oplus}{N}H_3)-CH_2-\overset{\oplus}{N}H_3$ , 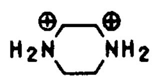 , $\overset{\oplus}{N}H_4$ oder $N_2\overset{\oplus}{H_5}$ .

Zu dem Begriff "Oxidationsstufe" siehe Lehrbuch der Anorganischen Chemie von A.F. Hollemann und E. Wiberg, Walter de Gruyter und Co. (1964, 57. bis 70. Auflage) Seite 166 bis 177.

Von Vorteil sind
$Li^{\oplus}$, $Mg^{2\oplus}$, $Ca^{2\oplus}$, $Sr^{2\oplus}$, $Ba^{2\oplus}$, $Al^{3\oplus}$, $Sn^{2\oplus}$, $Zn^{2\oplus}$, $Sc^{3\oplus}$, $Co^{3\oplus}$, $Mn^{2\oplus}$,

$\overset{\oplus}{N}H_3-CH_2-CH_2-\overset{\oplus}{N}H_3$ und $\overset{\oplus}{N}H_3-CH_2-CH_2-NH-CH_2\ CH_2-\overset{\oplus}{N}H_3$,

insbesondere aber $Zn^{2\oplus}$.

Die Herstellung der erfindungsgemäßen ionischen Polymerisate erfolgt zweckmäßigerweise in der Art, daß man zuerst nichtionische Polymerisate herstellt und diese mit Verbindungen, die die gewünschten Kationen C liefern, umsetzt.

Für die Einführung der Reste B und gegebenenfalls der Reste D in die Alkadien-Polymerisate A′ - d.h. die Synthese der nichtionischen Polymerisate - werden die Alkadien-Polymerisate A′ zunächst mit Maleinsäureanhydrid umgesetzt. Diese im folgenden als "Maleinierung" bezeichnete Reaktion ist an sich bekannt und wird beispielsweise in US-A-3 511 861 oder von C.P. Pinazzi und Mitarbeitern in Bull. Soc. Chim. France, 2, 433 ff. (1961) eingehend beschrieben. Sie kann prinzipiell auf zwei verschiedenen Wegen erfolgen. Der eine Weg ist die thermische Maleinierung, auch "En-Reaktion" genannt. Der zweite Weg ist die radikalische Maleinierung in der Gegenwart von pfropfaktiven Radikalstartern. Dabei kann je nach Konsistenz der Alkadien-Polymerisate A′ (flüssig oder fest) in Substanz oder in Lösung gearbeitet werden.

Die thermische Maleinierung flüssiger Alkadien-Polymerisate A′ erfolgt in Substanz unter Stickstoff bei ca. 190 °C. Zweckmäßigerweise setzt man Gel-Inhibitoren wie Hydrochinon in geringen Mengen zu. Ferner erweist es sich als vorteilhaft, kleine Mengen an inerten Lösungsmitteln zuzusetzen, um nach oben absublimierendes Maleinsäureanhydrid wieder in die Reaktionsmischung zurückzuwaschen.

Die thermische Maleinierung fester Alkadien-Polymerisate A′ erfolgt zweckmäßigerweise in Lösung. Soll bei Normaldruck und unter Stickstoff gearbeitet werden, so wird ein hochsiedendes Lösungsmittel, wie z.B.

Dekalin, Tetralin, Methylisobutylketon oder $\alpha$-Chlornaphthalin verwendet. Soll in einem gerührten Autoklaven bei Überdruck gearbeitet werden, so wird ein niedriger siedendes Lösungsmittel, z.B. Benzol, Toluol oder Xylol verwendet.

Der Alkadien-Polymerisatgehalt des Lösungsmittels liegt im allgemeinen zwischen 5 und 40 Gew.% und die Maleinsäureanhydridmenge zwischen 5 und 40 Gew.%, bezogen auf $A'$. Zweckmäßigerweise setzt man noch 0,1 bis 5 Gew.%, bezogen auf Maleinsäureanhydrid und $A'$, an Gel-Inhibitor zu und führt die Reaktion bei 190 bis 230 °C durch.

Die radikalische Maleinierung wird bevorzugt in Lösung durchgeführt. Die Alkadien-Polymerisate $A'$ werden zusammen mit dem Maleinsäureanhydrid vorgelegt und unter Inertgasatmosphäre auf Reaktionstemperatur gebracht. Der Radikalstarter kann zusammen mit $A'$ und Maleinsäureanhydrid in einer Portion vorgelegt werden; er kann aber auch erst nach Erreichen der Reaktionstemperatur auf einmal zugegeben werden; oder er kann während der gesamten Reaktionszeit periodisch in kleinen Portionen oder kontinuierlich zudosiert werden. Geeignete Radikalstarter sind Peroxide, Hydroperoxide oder Azoverbindungen, z.B. Di-t.-Butylperoxid, Benzoylperoxid, t-Butylperbenzoat, Dicumylperoxid oder Azodiisobutyronitril. Als Reaktionsmedium kommen inerte Lösungsmittel mit einem Siedepunkt im Bereich von 100 bis 200 °C in Betracht. Das Lösungsmittel enthält $A'$ in einer Konzentration von 5 bis 30 Gew.%. Bezogen auf das Oligomer, enthält die Reaktionslösung 10 bis 40 Gew.% Maleinsäureanhydrid und 0,1 bis 10 Gew.% an Radikalstartern. Die Reaktion wird zwischen 100 und 200 °C durchgeführt.

Die maleinierten Alkadien-Polymerisate $A'$ werden dann direkt im bereits vorhandenen Lösungsmittel oder nach der Isolierung durch Ausfällen partiell verestert oder amidiert, wobei die partielle Veresterung (Teilveresterung) bevorzugt ist.

Das Ergebnis dieser Umsetzung ist die Einführung der Reste B und gegebenenfalls der Reste D in die Alkadien-Polymerisate $A'$ - d.h. die Bildung der nichtionischen Polymerisate.

Von Vorteil ist die Umsetzung der seitenständigen Bernsteinsäureanhydridgruppen in den maleinierten Alkadien-Polymerisaten $A'$ mit Hydroxi- oder Aminoderivaten von Verbindungen, welche olefinisch ungesättigte Doppelbindungen enthalten (Vorstufe der Reste B) oder zusätzlich mit solchen Verbindungen, welche starke polare Gruppen enthalten (Vorstufen der Reste D).

Für die Bildung der Reste B geeignete Verbindungen sind z.B.: 2-Hydroxiethylacrylat, 2-Hydroxiethylmethacrylat, 3-Hydroxipropylacrylat, 3-Hydroxipropylmethacrylat, 4-Hydroxibutylacrylat, 4-Hydroxibutylmethacrylat, Neopentylmethacrylat, Neopentylacrylat, Pentaerythrittriacrylat, 1,1,1-Trimethylolpropandiacrylat, 1,1,1-Trimethylolpropandimethacrylat, Glycidylacrylat, Glycidylmethacrylat, Glycidyldiacrylat, Glycidyldimethacrylat, 2-Aminoethylacrylamid, 2-Aminoethylmethacrylamid, 2-Hydroxiethylacrylamid, 2-Hydroxiethylmethacrylamid, Diethanolaminacrylat, Diethanolaminmethacrylat, Diethylenglykolacrylat, Diethylenglykolmethacrylat, Triethylenglykolacrylat, Triethylenglykolmethacrylat, Tetraethylenglykolacrylat, Tetraethylenglykolmethacrylat, 4-Hydroxi-n-butyl-vinylether, 4-Aminobutyl-vinylether, 2-Hydroxiethyl-vinylether, 4-Hydroxibuten-1, oder 4-Aminobuten-1, von denen 2-Hydroxiethylmethacrylat,Glycidylmethacrylat und 4-Hydroxi-n-butyl-vinylether bevorzugt sind.

Für die Bildung der Reste $R^5$ geeignete Verbindungen sind z.B. Glycerin, 1,2,6,7-Tetrahydroxi-4-oxaheptan, Ethylenglykol, Ethanolamin, 2-Thioloethanol, Ethylendiamin, 2-Hydroxiethansulfonsäure, 2-Hydroxiethanphos-phonsäure, $\beta$-Hydroxipropionsäure, Poly(ethylenoxid) oder $\omega$-Alkyl-poly(ethylenoxid).

Wünscht man Reste D in das Alkadien-Polymerisat $A'$ einzuführen, dann muß die Menge der zur Bildung der Reste B geeigneten Verbindungen so gewählt werden, daß mindestens eine freie Bernsteinsäureanhydridgruppe pro Molekül eines maleinierten Alkadien-Polymerisats $A'$ für die Umsetzung mit den zur Bildung der Reste D geeigneten Verbindungen zur Verfügung steht.

Die Umsetzung maleinierter Alkadien-Polymerisate $A'$ mit Hydroxiverbindungen der genannten Art ist aus JP-A-81/118 434, DE-A-27 33 274 oder GB-A-2 048 941 bekannt. Dazu wird in einem geeigneten inerten Lösungsmittel, z.B. Toluol, Ethylbenzol, Xylol oder Methylisobutylketon das maleinierte Alkadien-Polymerisat $A'$ in einer Konzentration von 10 bis 80 Gew.%, bezogen auf das Gewicht der Lösung, vorgelegt. Dazu fügt man bei Raumtemperatur, jeweils bezogen auf maleiniertes $A'$, 0,3 bis 5 Gew.% an einem tertiären Amin wie Triethylamin, Tri-n-butylamin, 1-Methylpyrrol oder p-Dimethylaminopyridin als Katalysator, 0,3 bis 5 Gew.%, an einem Gelinhibitor wie N-Nitrosodiphenylamin und die gewünschten Hydroxiverbindungen. Die Mengen und die Art der Hydroxiverbindungen richten sich zum einen nach der Anzahl der Bernsteinsäureanhydridgruppen im maleinierten Alkadien-Polymerisat $A'$ und zum anderen nach den gewünschten Verhältnissen von Resten B zu Resten D im Endprodukt. Die Mischung wird anschließend mehrere Stunden bei 50 bis 90 °C gerührt und die Reaktion über die fortlaufende Bestimmung der Intensität der für das maleinierte Alkadien-Polymerisat $A'$ charakteristischen IR-Absorptionsbande bei 1780 $cm^{-1}$ verfolgt. Die Produkte der Teilveresterung werden durch ihre Säurezahl charakterisiert. Darunter wird die Menge an 100 %iger KOH in mg verstanden, die zur Neutralisation der in 1 g Produkt enthaltenen freien

Säurefunktionen benötigt wird. Die Produkte der Teilveresterung werden entweder direkt in der nativen Lösung mit geeigneten Kationen liefernden Verbindungen umgesetzt oder durch Abdampfen des Lösungsmittels isoliert und anschließend weiter verarbeitet.

Bei dem zweiten Verfahren zur partiellen Veresterung und Amidierung maleinierter Alkadien-Polymerisate A′ werden in einem ersten Verfahrensschritt die darin enthaltenen Anhydridgruppen mit einer äquimolaren Menge an Wasser unter Bildung von Succin-1-yl- und -2-yl-Gruppen hydrolysiert und bei Raumtemperatur mit einer Glycidyl-, Oxiran-, Aziridin- oder Thiiranverbindung vermischt. Die Zugabe sterisch gehinderter phenolischer Antioxidantien wie z.B. 2,6-Di-t-butyl-p-kresol in Mengen von 0,1 bis 5 Gew.%, bezogen auf das maleinierte Alkadien-Polymerisat A′, ist dabei von Vorteil. Die Umsetzung wird bei 60 °C durchgeführt.

Die Menge und die Art der Glycidyl-, Oxiran-, Aziridin- oder Thiiranverbindung richten sich zum einen nach der Anzahl der Succin-1-yl- und 2-yl-Gruppen im hydrolysierten maleinierten Alkadien-Polymerisat A′ und zum anderen nach den gewünschten Verhältnissen von Resten B zu Resten D im Endprodukt.

Geeignete Glycidyl-, Oxiran-, Aziridin- oder Thiiranverbindungen für die Bildung der Reste B sind z.B. Glycidylacrylat, Glycidylmethacrylat, 1,2-Dihydroxiprop-3-yl-vinylether, 6,7-Dihydroxi-4-oxa-hept-1-yl-vinylether, 8,9-Dihydroxi-6-oxa-nonen-1, Oxiran-2-methylolmethacrylat, Aziridin-2-methylolmethacrylat oder Thiiran-2-methylolmethacrylat, von denen Glycidylmethacrylat bevorzugt ist.

Geeignete Verbindungen zur Bildung der Reste D enthalten einen Glycidyl-, Oxiran-, Aziridin- oder einen Thiiranrest und polare Gruppen. Solche Umsetzungen sind aus JP-A-80/087 465, JP-A-78/033 233 oder JP-A-75/100 190 bekannt.

In bevorzugter Verfahrensweise erfolgt die Einführung der Kationen C in die maleinierten und teilveresterten bzw. teilamidierten Alkadien-Polymerisate A′ - d.h. die Bildung der erfindungsgemäßen ionischen Polymerisate - durch ihre Umsetzung mit

1. anorganischen Metallverbindungen wie Oxiden, Hydroxiden, Alkoxiden mit 1 bis 4 C-Atomen im Alkylrest oder Carbonaten von Li, Mg, Ca, Sr, Ba, Al, Ga, In, Ge, Sn, Pb, Sb, Bi, Zn, Cd, Hg, Cu, Sc, Y, La, Ti, Zr, Hf, V, Nb, Ta, Cr, Mo, W, Mn, Re, Fe, Co, Ni, Pd oder den Lanthaniden oder mit
2. organischen Metallverbindungen der Struktur (III),

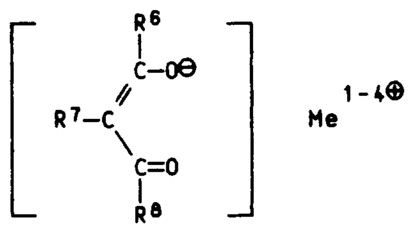

(III)

worin Me ein Kation eines der vorstehend genannten Elemente bedeutet, $R^6$, $R^7$ und $R^8$ gleichartige oder verschiedenartige Alkyl-, Cycloalkyl-, Aryl- oder Alkylarylgruppen darstellen, wobei die Reste $R^6$ und $R^8$ cyclisch über Ringsysteme miteinander verknüpft sein können und wobei ferner $R^6$ auch noch ein Wasserstoffatom kennzeichnen kann, oder mit
3. Ammoniak oder mit
4. mehrfachfunktionellen Aminen wie Ethylendiamin, Diethylentriamin, N-Methyl-N-ethyl-ethylendiamin, N,N-Dimethyl-ethylendiamin, N,N′-Diethyl-ethylendiamin, N,N,N′,N′-Tetramethylethylendiamin, N,N,N",N"-Tetramethylethylentriamin, 1,3-Diaminopropan, 1,4-Diaminobutan, Pyrazin oder Polyvinylpyridin oder mit
5. Hydrazin.

Bevorzugt sind die Oxide, Hydroxide, Alkoxide, Carbonate und Acetylacetonate von $Li^{\oplus}$, $Mg^{2\oplus}$, $Ca^{2\oplus}$, $Sr^{2\oplus}$, $Ba^{2\oplus}$, $Al^{3\oplus}$, $Sn^{2\oplus}$, $Sb^{3\oplus}$ und $Zn^{2\oplus}$. Besonders bevorzugt sind die Acetylacetonate, insbesondere Bis-(acetylacetonato)Zn(II).

Die Einführung der Kationen C in die maleinierten und teilveresterten bzw. amidierten Alkadien-Polymerisate A′ kann in der Schmelze oder in Lösung erfolgen. Von Vorteil ist die Reaktion in einem Lösungsmittel, das in der Lage ist, alle in Frage kommenden Komponenten homogen zu lösen, z.B. Methylenchlorid, Chloroform, Essigsäureethylester, Acetylaceton, Acetylessigsäureethylester, Acetonitril, Propionitril, Aceton, Methylethylketon, Diethylether, Tetrahydrofuran, Dioxan, Toluol, Ethylbenzol oder Xylol. Bevorzugt sind Toluol und Tetrahydrofuran. Dabei liegt das nichtionische Polymerisat in einer Konzentration von 10 bis 80 Gew.%, vorzugsweise von 20 bis 70 Gew.% und insbesondere von 25 bis 60 Gew.%, bezogen auf das Gewicht der Lösung, vor. Dazu fügt man bei Raumtemperatur, bezogen auf das

Polymerisat 0,5 bis 20 Gew.%, bevorzugt 1 bis 15 Gew.% und insbesondere 2 bis 12 Gew.% an Kationen C liefernden Verbindungen, insbesondere Bis(acetylacetonato)Zn(II). Die Reaktion läuft bei Raumtemperatur spontan ab. Die resultierende Lösung der erfindungsgemäßen ionischen Polymerisate kann direkt für die Herstellung lichtempfindlicher Aufzeichnungsmaterialien verwendet werden. Es ist aber auch möglich, die erfindungsgemäßen Polymerisate durch Abdampfen des Lösungsmittels zu isolieren.

Zur Herstellung lichtempfindlicher Aufzeichnungsmaterialien und Aufzeichnungsmaterialien daraus werden den erfindungsgemäßen ionischen Polymerisaten geeignete Photoinitiatoren zugegeben. Solche Photoinitiatoren können für sich alleine oder in Mischung miteinander zugegeben werden. Von Vorteil sind Acyloine und deren Derivate, wie Benzoin, Benzoinalkylether, z.B. Benzoinisopropylether, $\alpha$-Methylolbenzoin und dessen Ether, wie z.B. $\alpha$-Methylolbenzoinmethylether, oder $\alpha$-Methylbenzoin und $\alpha$-Methylbenzoinethylether; vicinale Diketone und deren Derivate, wie z.B. Benzil, Benzilacetale, wie Benzildimethylacetal, Benzilmethylethylacetal, Benzilmethylbenzylacetal oder Benzilethylenglykolacetal; sowie insbesondere Acylphosphinoxid-Verbindungen des Typs, wie sie z.B. in der DE-A-29 09 992 und der DE-A-31 14 341 für den Einsatz in photopolymerisierbaren Mischungen beschrieben sind. Bevorzugte Vertreter von Initiatoren aus der Klasse der Acylphosphinoxide sind 2,6-Dimethoxibenzoyl-diphenylphosphinoxid, 2,4,6-Trimethylbenzoyl-diphenylphosphinoxid, 2,4,6-Trimethylbenzoyl-phenylphosphinsäureethylester und 2,4,6-Trimethylbenzoyl-phenylphosphinsäure-Natrium-Salz. Die Photopolymerisationsinitiatoren können auch in Verbindung mit anderen Coinitiatoren und/oder Aktivatoren, wie sie in der einschlägigen Literatur beschrieben sind, verwendet werden. Geeignet sind ferner photoreaktive Initiatoren, welche eine kationische Polymerisation initiieren, wie z.B. Pyrryliumhexafluorarsenat, gemäß EP-A-74073. Die Photoinitiatoren werden mit Vorteil in einer Menge 0,001 bis 10 Gew.-Teilen auf 100 Gew.-Teile an erfindungsgemäßem ionischem Polymerisat angewendet, wobei die Menge mitbestimmt wird von der Mitverwendung von photopolymerisierbaren Monomeren.

Für die Herstellung von Druckplatten, Materplatten, Reliefplatten und Photoresists ist es oft von Vorteil, wenn die lichtempfindlichen Aufzeichnungsmaterialien nicht photopolymerisierbare Hilfs-und/oder Zusatzstoffe enthalten, z.B. Inhibitoren der thermisch initiierten Polymerisation, Farbstoffe, Pigmente, Weichmacher, Mittel zur Verbesserung der Reliefstruktur, Vernetzungshilfsmittel, Antioxidantien, Antiozonantien, Füllstoffe, Flußmittel, Lichthofschutzmittel und/oder Formtrennmittel.

Die lichtempfindlichen Aufzeichnungsmaterialien können ferner photopolymerisierbare, nichtgasförmige Monomere enthalten. Diese Monomere sollen mit dem erfindungsgemäßen ionischen Polymerisaten verträglich sein. Unter "verträglich" ist dabei die Fähigkeit von zwei oder mehreren Bestandteilen zu verstehen, ineinander dispergiert zu bleiben, ohne eine wesentliche Streuung von aktinischer Strahlung zu verursachen. Außerdem sollen sie in den für die Entwicklung der lichtempfindlichen Aufzeichnungsmaterialien verwendeten flüssigen basischen Medien löslich oder zumindest dispergierbar sein.

Bei geeigneten Monomeren handelt es sich im wesentlichen um Ester oder Amide der Acryl- oder Methacrylsäure. Von Vorteil sind $\omega$-Alkyl-poly(alkylenoxid)-$\alpha$-yl-(meth)acrylate wie $\omega$-Methyl-poly-(ethylenoxid)-$\alpha$-yl-acrylat, Umsetzungsprodukte von Glycerin, Epichlorhydrin und Acrylsäure im Molverhältnis von z.B. 1:3:3, Tripropylenglykoldiacrylat oder Trimethylolpropantriacrylat. Sie können in einer Menge von bis zu 30 Gew.-Teilen auf 100 Gew.-Teile an erfindungsgemäßen ionischem Polymerisat verwendet werden.

Alle Komponenten sind dabei so aufeinander abgestimmt, daß die erfindungsgemäßen lichtempfindlichen Aufzeichnungsmaterialien nach der bildmäßigen Belichtung mit flüssigen basischen Medien auswaschbar, d.h. entwickelbar sind.

Geeignete flüssige basische Medien sind organische Amine wie Triethylamin, Diethylamin, Di-n-butylamin, Methyl-di-n-butylamin, Ethylendiamin, Triethylendiamin, Ethanolamin, Diethanolamin, Triethanolamin, Pyridin, Pyrrol oder Pyrazin; Gemische aus solchen Aminen und auch von Ammoniak mit Lösungsmitteln wie $H_2O$, Methanol, Ethanol, Propanol, Butanol, Diethylether, Di-n-butylether, Aceton, Methylethylketon, Tetrahydrofuran oder Dioxan; Lösungsmittel wie N-Methylpyrrolidon, Dimethylsulfoxid oder Hexamethylphosphorsäuretriamid und ihre Gemische mit Lösungsmitteln der vorstehend genannten Art; oder wäßrige Lösungen anorganischer Basen wie LiOH, NaOH oder KOH oder alkoholische Lösungen von Alkoxiden wie $LiOCH_3$ oder $NaOC_2H_5$; oder wäßrige Lösungen stark basischer Salze, wie z.B. $Na_2CO_3$, $K_2CO_3$ oder Na-$(OOCCH_3)$. Bevorzugt sind Lösungen von Ammoniak, NaOH oder $Na_2CO_3$ in Wasser.

Die lichtempfindlichen Aufzeichnungsmaterialien und deren Folgeprodukte (Aufzeichnungsmaterialien), welche unter Verwendung der erfindungsgemäßen ionischen Polymerisate hergestellt wurden, werden im allgemeinen im Verbund mit weiteren geeigneten schichtförmigen Materialien verwendet. Solche Verbundmaterialien werden daher als "Mehrschichtenelemente" bezeichnet. Deren lichtempfindliche Schichten werden dann - ihrer Funktion gemäß - als "photopolymerisierbare oder photovernetzbare reliefbildende Schichten (RS)" bezeichnet.

Die Dicke der photopolymerisierbaren oder photovernetzbaren reliefbildenden Schicht (RS) kann, je nach Anwendungszweck der Mehrschichtenelemente in weiten Grenzen schwanken und wird im allgemeinen im Bereich von 0,1 bis 6000 µm liegen. Für die Herstellung von Druckformen, Relief - und Materformen sowie von Photoresistmustern sind Schichtdicken im Bereich von 1 bis 6000 µm, insbesondere 1,5 bis 2.000 µm bevorzugt.

Die photopolymerisierbare oder photovernetzbare reliefbildende Schicht (RS) kann auf einem dimensionsstabilen Träger direkt aufgebracht sein; sie kann jedoch, in Abhängigkeit von den eingesetzten Materialien, auch mittels einer Haftschicht, die im allgemeinen etwa 0,5 bis 40 µm dick ist, mit dem Träger (T) verbunden sein. Als Haftschichten können die hierfür üblichen und bekannten Kleber bzw. Haftlacke verwendet werden, beispielsweise 1- oder 2-Komponenten-Kleber auf Polyurethan-Basis oder Haftschichten, wie sie in der DE-A-30 15 419 beschrieben sind.

Als Träger (T) für die Mehrschichtenelemente kommen die für die Herstellung von Druck-, Mater- und Reliefformen oder Photoresistmustern geeigneten, dimensionsstabilen, starren oder flexiblen Träger in Betracht. Hierzu gehören insbesondere dimensionsstabile Kunststoff-Folien, wie z.B. Polyesterfolien, sowie metallische Träger, z.B. Stahlbleche, Eisenbleche, Nickelbleche, Aluminiumbleche oder konische Nickelröhren (Sleeves). Desweiteren kommen gummielastische Folien und Schaumstoffe als Träger (T) in Betracht. Für die Herstellung von Photoresistschichten können auch Kupfer, kupferbeschichtete Materialien, gedruckte Schaltungen etc. als Trägermaterialien für die reliefbildende Schicht (RS) Anwendung finden. Die Träger, insbesondere die metallischen Träger, können in an sich bekannter Art mechanisch, chemisch, elektrochemisch und/oder durch Versehen mit einer Haftgrundierung vorbehandelt sein. Zur Erzielung einer hinreichenden Haftfestigkeit zwischen Träger (T) und reliefbildender Schicht (RS) können, insbesondere bei Mehrschichtenelementen für die Herstellung von Druck- und Reliefformen, zwischen dem Träger (T) und der lichthärtbaren reliefbildenden Schicht (RS) eine oder mehrere Haftschichten angeordnet sein. Die Wahl des Trägermaterials richtet sich vornehmlich nach dem vorgesehenen Anwendungszweck der Mehrschichtenelemente. Für die Haftschichten zwischen Träger (T) und reliefbildender Schicht (RS) kommen die üblichen und bekannten, in der einschlägigen Literatur beschriebenen Materialien in Betracht.

Auf die photopolymerisierbare oder photovernetzbare reliefbildende Schicht (RS) der Mehrschichtenelemente kann noch eine - gegebenenfalls mattierte - Deckschicht und/oder Schutzschicht aus beispielsweise hochverseiftem Polyvinylacetat als Sauerstoffsperre aufgebracht werden. Im allgemeinen sind solche Deck- und/oder Schutzschichten 0,5 bis 150 µm dick.

Die Herstellung der Mehrschichtenelemente erfolgt in an sich bekannter Weise durch Herstellen und Verbinden der einzelnen Schichten. Beispielsweise kann die photopolymerisierbare oder photovernetzbare reliefbildende Schicht (RS) durch homogenes Vermischen der Bestandteile, Pressen, Extrudieren oder Kalandrieren hergestellt und dann mit dem Träger (T) in geeigneter Weise, beispielsweie durch Laminieren, verbunden werden. Vorteilhaft werden die Komponenten der reliefbildenden Schicht (RS) in einem Lösungsmittel, vorzugsweise Toluol und/oder Tetrahydrofuran, gelöst und die reliefbildende Schicht (RS) durch Gießen aus dieser Lösung auf den Träger (T) hergestellt. Die nicht glatt toluol- oder tetrahydrofuranlöslichen Komponenten der reliefbildenden Schicht (RS) werden gegebenenfalls in toluol- oder tetrahydrofuranmischbaren, organischen Lösungsmitteln, wie niederen Alkoholen, niederen Ketonen etc., vorgelöst und dann mit der Toluol- oder der Tetrahydrofuran-Gießlösung vereinigt. Nach dem Gießen der reliefbildenden Schicht (RS) wird das Lösungsmittel in üblicher Weise entfernt und die Schicht getrocknet.

Die Mehrschichtenelemente eignen sich beispielsweise für die Herstellung von Druckformen, Materplatten, Reliefformen oder von Photoresistmustern. Hierzu wird die photopolymerisierbare oder photovernetzbare reliefbildende Schicht (RS) der Mehrschichtenelemente in üblicher und an sich bekannter Weise bildmäßig mit aktinischem Licht belichtet und durch Auswaschen der unbelichteten, unvernetzten Schichtanteile mit flüssigen basischen Medien entwickelt.

Für die Belichtung, die in Form einer Flach- oder Rundbelichtung erfolgen kann, eignen sich die üblichen Lichtquellen von aktinischem Licht, wie beispielsweise UV-Fluoreszenzröhren, Quecksilberhoch-, -mittel- oder -niederdruckstrahler, superaktinische Leuchtstoffröhren, Xenon-Impulslampen, Metallhalogeniddotierte Lampen, Kohlebogenlampen oder Sonnenlicht. Die emitierte Wellenlänge soll im allgemeinen zwischen 230 und 450 nm, bevorzugt zwischen 300 und 420 nm liegen und auf die Eigenabsorption des mitverwendeten Photoinitiators abgestimmt sein.

Das Entwickeln des Reliefbildes kann durch Waschen, Bürsten etc. mit dem Entwicklerlösungsmittel erfolgen. Wegen der großen Wasserbeständigkeit der belichteten photopolymerisierten oder photovernetzten Reliefschicht (RS′) besitzen die Mehrschichtelemente den Vorteil, daß die Auswaschbedingungen bei der Entwicklung mit Wasser verschärft werden können, ohne daß dies zu einer Beeinträchtigung der Formen und Muster führt. Im Gegenteil lassen sich hierdurch schärfere Reliefstrukturen erhalten. Nach dem Auswaschen werden die resultierenden Formen und Muster in üblicher Weise, gegebenenfalls bei Temperaturen bis zu 120 °C getrocknet. In manchen Fällen ist es zweckmäßig, die erhaltenen Formen und Muster anschließend nochmals vollflächig mit aktinischem Licht nachzubelichten, um die Festigkeit der Reliefschicht (RS″) zu erhöhen.

Die Mehrschichtenelemente, die unter Verwendung der erfindungsgemäßen ionischen Polymerisate hergestellt wurden, ergeben nicht nur Formen und Muster mit einer außerordentlich hohen Wasserbeständigkeit, so daß sie auch in einem feucht-warmen Klima eine hohe Lagerbeständigkeit und hohe Wiederverwendbarkeit besitzen, sondern auch Produkte mit besseren Zwischentiefen und besserer Schärfe als die herkömmlichen Systeme, ausgeprägter Reliefstruktur sowie hoher Elastizität und glatter Oberfläche.

Beispiele

Die Erfindung wird durch die nachfolgenden Beispiele erläutert. Die in den Beispielen und Vergleichsversuchen genannten Teile und Prozente beziehen sich, soweit nicht anders angegeben auf das Gewicht. Volumenteile verhalten sich zu Teilen wie Liter zu Kilogramm. Unter Verseifungszahl ist die Menge an 100%iger KOH in mg zu verstehen, die notwendig ist, um die in 1 g Substanz durch Hydrolyse gebildeten freien Säuregruppen zu neutralisieren.

Herstellung nichtionischer Polymerisate

Bezugsbeispiele 1 bis 4

Für die Beispiele und die Vergleichsversuche wurden verschiedene nichtionische Polymerisate hergestellt. Der erste Schritt ist hierbei die Maleinierung von Butadienoligomeren des zahlenmittleren Molgewichts $\overline{M}_n$ von 500 bis 10.000.

Bezugsbeispiel 1

Maleinierung von Oligobutadien, $\overline{M}_n$ = 1.300, Mikrostruktur: 45 % Vinyldoppelbindungen, 40 % 1,4-trans- und 15 % 1,4-cis-Doppelbindungen.

In einem 4 l-Dreihalskolben, ausgestattet mit einem mechanischen Rührer, einem Rückflußkühler, einem Thermometer und einem $N_2$-Spülanschluß, wurden 2.500 g Oligobutadien, 500 g Maleinsäureanhydrid, 100 g Xylol und 25 g Hydrochinon (Gel-Inhibitor) vorgelegt, der Reaktionskolben 5 Minuten lang mit Stickstoff gespült, unter $N_2$-Atmosphäre und ständigem Rühren auf 190 °C aufgeheizt, während 6 Stunden auf 190 °C gehalten und das Xylol im Vakuum abgezogen. Zur Umsatzbestimmung wurde eine kleine Probe in Ethanol ausgefällt und nach zweimaligem Umfällen mit Ethanol aus Toluol die Verseifungszahl ermittelt. Der Umsatz (bezogen auf eingesetztes Maleinsäureanhydrid) lag bei mehr als 90 %. Danach handelte es sich bei dem Umsetzungsprodukt um ein maleiniertes Oligobutadien mit einem Maleinierungsgrad von 15 %.

In gleicher Weise wurden
als Bezugsbeispiel 2
- ein maleiniertes Oligobutadien ($\overline{M}_n$ des Ausgangsproduktes = 5.000; Mikrostruktur: 17 % Vinyldoppelbindungen, 55 % 1,4-trans- und 30 % 1,4-cis-Doppelbindungen) mit einem Maleinierungsgrad von 20 %,

als Bezugsbeispiel 3
- ein maleiniertes Oligobutadien (Ausgangsprodukt wie bei Bezugsbei-spiel 2) mit einem Maleinierungsgrad von 10 % und

als Bezugsbeispiel 4
- ein maleiniertes Oligobutadien (Ausgangsprodukt wie bei Bezugsbeispiel 1) mit einem Maleinierungsgrad von 5 %

hergestellt.

Bezugsbeispiele 5 bis 9

Die maleinierten Oligobutadiene der Bezugsbeispiele 1 bis 4 wurden teilverestert. Vorteilhaft sind zwei Methoden:

Methode I, Umsetzung der maleinierten Oligobutadiene mit Hydroxigruppen enthaltenden Verbindungen (Bezugsbeispiele 5 bis 8)

Methode II, Hydrolyse der maleinierten Oligobutadiene und Umsetzung mit Glycidylgruppen enthaltenden Verbindungen (Bezugsbeispiel 9).

Die Produkte der Umsetzungen sind die nichtionischen Polymerisate.

Bezugsbeispiel 5

In einem 2 l-Dreihalskolben, ausgestattet mit Rührer, Rückflußkühler, Thermometer und Tropftrichter wurden 654 g maleiniertes Oligobutadien gemäß Bezugsbeispiel 1, 1.000 ml Toluol (über Molekularsieb getrocknet), 3 g Dimethylaminopyridin, 3 g N-Nitrosodiphenylamin und 196 g 2-Hydroxiethylmethacrylat bei Raumtemperatur gemischt und während 3 bis 5 Stunden bei 50 bis 90 °C gerührt. Nach dieser Zeit war die für das Maleinsäureanhydrid-Oligobutadienaddukt charakteristische IR-Absorptionsbande bei 1780 $cm^{-1}$ verschwunden. Überschüssiges 2-Hydroxiethylmethacrylat wurde zusammen mit dem Lösungsmittel im Vakuum abdestilliert und das Produkt durch seine Säurezahl und die Gewichtszunahme charakterisiert. Die Säurezahl zeigte, daß mehr als 95 % der ursprünglich vorhandenen Bernsteinsäureanhydridgruppen umgesetzt waren. Die Gewichtszunahme betrug 19,8 %, bezogen auf das maleinierte Oligobutadien des Bezugsbeispiels 1.

In gleicher Weise wurden hergestellt:
als Bezugsbeispiel 6
- ein nichtionisches Polymerisat aus dem maleinierten Oligobutadien gemäß Bezugsbeispiel 2, in dem mehr als 95 % der ursprünglich vorhandenen Bernsteinsäureanhydridgruppen umgesetzt waren; und

als Bezugsbeispiel 7
- ein nichtionisches Polymerisat aus dem maleinierten Oligobutadien gemäß Bezugsbeispiel 3, in dem mehr als 95 % der ursprünglich vorhandenen Bernsteinsäureanhydridgruppen umgesetzt waren.

Bezugsbeispiel 8

In einem 2 l-Dreihalskolben, ausgestattet mit einem mechanischen Rührer, einem Rückflußkühler und einem Thermometer wurden bei Raumtemperatur 500 g maleiniertes Oligobutadien gemäß Bezugsbeispiel 4, 29 g 4-Hydroxibutyl-vinylether, 20 g Pyridin, 0,3 g Dimethylaminopyridin und 0,3 g N-Nitrosodiphenylamin vorgelegt und während 3 bis 5 Stunden bei 50 bis 70 °C gerührt. Nach dieser Zeit war die für das maleinierte Oligobutadien charakteristische IR-Absorptionsbande bei 1780 $cm^{-1}$ verschwunden. Das Produkt wurde im Vakuum getrocknet und durch seine Säurezahl und die Gewichtszunahme charakterisiert. Die Säurezahl zeigte, daß mehr als 90 % der ursprünglich vorhandenen Bernsteinsäureanhydridgruppen reagiert hatten. Die Gewichtszunahme betrug 5,8 %, bezogen auf das maleinierte Oligobutadien des Bezugsbeispiels 4.

Bezugsbeispiel 9

300 g maleiniertes Oligobutadien gemäß Bezugsbeispiel 2 mit einem Maleinierungsgrad von 20 % wurde mit einer äquivalenten Menge an Wasser hydrolysiert und bei Raumtemperatur mit 64 g Glycidylmethacrylat und 2 g 2,6-Di-tert.-butyl-p-kresol vermischt, während 5 Stunden bei 60 °C gerührt und anschließend die überschüssigen Reaktanden im Vakuum entfernt. Anschließend wurde durch IR-Spektroskopie und durch die Säurezahl das Produkt charakterisiert. Die Säurezahl zeigte, daß ca. 66 % der ursprünglich vorhandenen Anhydridgruppen verestert worden waren.

Herstellung und Verwendung der erfindungsgemäßen ionischen Polymerisate

Die nichtionischen Polymerisate der Bezugsbeispiele 5 bis 9 wurden mit Bis(acetylacetonato)Zn(II) zu den erfindungsgemäßen ionischen Polymerisaten umgesetzt.

Der Kugeleindruck wurde in Anlehnung an DIN 50351 als Verhältnis von Prüflast zu Oberfläche des Eindrucks unter Prüflast ($p/mm^2$), der Deformationsweg (µm/µm Schichtdicke) bei einem Auflagendruck von 100 kp/0,64 cm bestimmt.

Beispiel 1 bis 3 und Vergleichsversuch 1

Einfluß der Kationenkonzentration auf mechanische und optische Eigenschaften der nichtionischen Polymerisate.

Toluolische Lösungen, bestehend aus a) nichtionischem Polymerisat gemäß Bezugsbeispiel 9, b) Benzildimethyacetal und c) Bis(acetylacetonato)Zn(II) wurden zu 3.500 µm dicken Probekörpern gegossen (Trockendicke). Der Zustand der Probekörper wurde visuell und manuell geprüft. Die Tabelle 1 gibt

Auskunft über die Zusammensetzung der Probekörper und die Versuchsergebnisse.

Der Vergleichsversuch 1 wurde in gleicher Weise durchgeführt; es entfiel aber die Zugabe von Bis-(acetylacetonato)Zn(II). Das Versuchsergebnis findet sich ebenfalls in Tabelle 1.

Tabelle 1

Einfluß der Kationenkonzentration auf mechanische und optische Eigenschaften des nichtionischen Polymerisates gemäß Bezugsbeispiel 9

| Beispiel Nr. | % Polymerisat gemäß Bezugsbeispiel 9 | % Bis(acetylacetonato) Zn(II) | resultierendes erfindungsgemäßes ionisches Polymerisat % A | % B | % C | % Benzildimethylacetal | Zustand der Probekörper |
|---|---|---|---|---|---|---|---|
| 1 | 94 | 3 | 59,55 | 39,72 | 0,73 | 3 | fest, klebrig, klar |
| 2 | 91 | 6 | 59,12 | 39,41 | 1,47 | 3 | fest, klebrig, klar |
| 3 | 87 | 10 | 58,55 | 39,03 | 2,42 | 3 | fest, klebfrei, klar |
| Vergleichsversuch 1 | 97 | 0 | — | | | 3 | flüssig, hochviskos, klar |

Beispiel 4 bis 6 und Vergleichsversuch 2

Die Beispiele 1 bis 3 wurden wiederholt, nur daß anstelle des Polymerisats gemäß Bezugsbeispiel 9 das Polymerisat gemäß Bezugsbeispiel 6 verwendet wurde. Die Tabelle 2 gibt Auskunft über die Zusammensetzung der Probekörper und die Versuchsergebnisse.

Der Vergleichsversuch 2 wurde in gleicher Weise durchgeführt; es entfiel aber die Zugabe von Bis-(acetylacetonato)Zn(II). Das Versuchsergebnis findet sich ebenfalls in Tabelle 2.

Tabelle 2

Einfluß der Kationenkonzentration auf mechanische und optische Eigenschaften des nichtionischen Polymerisates gemäß Bezugsbeispiel 6

| Beispiel Nr. | % Polymerisat gemäß Bezugsbeispiel 6 | % Bis(acetylacetonato) Zn(II) | resultierendes erfindungsgemäßes ionisches Polymerisat | | | % Benzildimethylacetal | Zustand der Probekörper |
|---|---|---|---|---|---|---|---|
| | | | % A | % B | % C | | |
| 4 | 94 | 3 | 59,55 | 39,72 | 0,73 | 3 | flüssig, hochviskos |
| 5 | 91 | 6 | 59,12 | 39,41 | 1,47 | 3 | fest, klar, leicht klebrig |
| 6 | 87 | 10 | 58,55 | 39,03 | 2,42 | 3 | fest, klar, klebfrei |
| Vergleichsversuch 2 | 97 | 0 | | — | | 3 | flüssig, klar |

Beispiel 7 und Verwendungsbeispiel 1

88,5 % Polymerisat gemäß Bezugsbeispiel 6, 5 % Bis(acetylacetonato)Zn(II) und 3 % Benzildimethylacetal wurden in Toluol gelöst (Feststoffgehalt 33 %). Dabei reagierte das Polymerisat mit dem Acetylacetonat unter Bildung eines erfindungsgemäßen ionischen Polymerisates, welches aus 59,26 % A, 39,52 % B und 1,22 % C bestand. Die Lösung wurde auf eine mit einem Polyurethanlack lackierte, 125 µm dicke Polyesterfolie gegossen, so daß eine Schichtdicke von 380 µm nach dem Trocknen resultierte. Die Schicht wurde durch eine Negativvorlage hindurch in einem Flachbelichter 6 Minuten lang belichtet. Das unbelichtete Material wird in einem Bürstenwascher mit wäßriger Natronlauge ausgewaschen. Die so erhaltenen Klischees besaßen eine hohe Auflösung, zeigten keinen Polymerisationsschrumpf und zeichneten sich durch eine ausgezeichnete Planlage aus. Die vernetzten Klischees besaßen eine Kugeleindruckhärte von 998± 10 p/mm$^2$. Sie zeigten nach 24-stündiger Behandlung mit Wasser bei 25 °C eine Gewichtsquellung von -0,3 % und einen Extraktionsverlust von 2 %. Die resultierende Druckform zeigte bei exakter Bildwiedergabe und guter Flexibilität ausgezeichnete Druckeigenschaften.

Beispiel 8 und Verwendungsbeispiel 2

80 % Polymerisat gemäß Bezugsbeispiel 5, 10 % Tripropylenglykoldiacrylat, 3 % Benzildimethylacetal und 7 % Bis(acetylacetenato)Zn(II) wurden in Toluol gelöst (Feststoffgehalt 40 %). Dabei reagierte das Polymerisat mit dem Acetylacetonat unter Bildung eines erfindungsgemäßen ionischen Polymerisates, welches aus 68,81 % A, 29,49 % B und 1,70 % C bestand. Die Lösung wurde gemäß Beispiel 7 auf eine 125 µm dicke Polyesterfolie gegossen. Nach Entfernen des Lösungsmittels wurde die Schicht mit einer 10 µm dicken Polyethylenfolie abgedeckt und anschließend 10 Minuten lang in einem Flachbelichter durch eine Negativvorlage hindurch belichtet. Nach der bildmäßigen Belichtung wurde die Polyethylenfolie unter Mitnahme von unbelichtetem Schichtmaterial entfernt. Die verbleibenden belichteten Bereiche wurden mit wäßriger NaOH-Lösung ausgewaschen. Man erhielt eine klebfreie Druckform mit hoher Auflösung und ausgezeichneter Bildwiedergabe.

Beispiel 9 und Verwendungsbeispiel 3

81,5 % Polymerisat gemäß Bezugsbeispiel 7, 10 % Tripropylenglykoldiacrylat, 3 % Benzildimethylacetal und 5,5 % Bis(acetylacetonato)Zn(II) wurden, wie in Beispiel 8 angegeben, zu einer Gießlösung vereinigt - dabei reagierte das Polymerisat mit dem Acetylacetonat unter Bildung eines erfindungsgemäßen ionischen Polymerisates aus 78,93 % A, 19,73 % B und 1,34 % C - und verarbeitet. Die mit Polyethylenfolie abgedeckte Schicht wurde durch ein Negativ hindurch belichtet. Nach Entfernen der Folie wurden die unbelichteten Bereiche mit wäßriger ammoniakalischer Lösung (pH = 10) ausgewaschen. Die so erhaltenen Klischees waren klebfrei, zeigten eine hohe Auflösung und besaßen einen Deformationsweg von 36µm/1000µm bei einem Auflagedruck von 100 kp/0,64 cm$^2$.

Vergleichsversuch 3

Es wurde wie in Beispiel 9 angegeben gearbeitet, nur daß diesmal kein Bis(acetylacetonato)Zn(II) zugesetzt wurde. Die unbelichteten Schichten waren hochviskos und zeigten einen ausgesprochen starken kalten Fluß. Nach der Belichtung der mit 10 µm dicken Polyethylenfolie abgedeckten Flüssigplatten durch ein Negativ hindurch erhielt man Klischees mit klebfreien Oberflächen, hoher Auflösung und guter Auswaschbarkeit in wäßrigem Ammoniak. Die belichteten Schichten besaßen einen Deformationsweg von 138 µm/1000 µm Schichtdicke bei einem Auflagedruck von 100 kp/0,64 cm$^2$.

Beispiel 10 und Verwendungsbeispiel 4

Es wurde mit Tetrahydrofuran als Lösungsmittel eine Lösung folgender Zusammensetzung hergestellt: 87 % Polymerisat gemäß Bezugsbeispiel 7, 10 % Bis(acetylacetonato)Zn(II) und 3 Gew.% Benzildimethylacetal (Feststoffgehalt 30 %). Dabei reagierte das Polymerisat mit dem Acetylacetonat unter Bildung eines erfindungsgemäßen ionischen Polymerisates aus 58,55 % A, 39,03 % B und 2,42 % C. Die Lösung wurde nach Filtration durch einen 1,5 µm Filter mit Hilfe einer Rakel auf eine 60 µm dicke, Polyethylenterephthalatfolie gleichmäßig aufgetragen, so daß nach der Trocknung eine 25 µm klebfreie Schicht resultierte. Auf ein kupferkaschiertes Substrat, wie es für die Herstellung von Leiterplatten verwendet wird, wurde bei 120 °C mit einer Geschwindigkeit von 1 m/min das oben hergestellte Mehrschichtenelement auflaminiert.

Die Resistschicht wurde durch eine photografische Negativvorlage 10 Sekunden lang mit einem 5000 W-Flachbelichter bildmäßig belichtet und die Polyethylenterephthalatfolie abgezogen. Die unbelichteten Schichtanteile wurden mit 0,5 % wäßriger Natronlauge ausgewaschen. Man erhielt ein vorlagengetreues, scharfkantiges Resistmuster. Die strukturierte Resistschicht gab Bildelemente mit hervorragender Auflösung und war in handelsüblichen Ätz- und Galvanikbädern hervorragend beständig.

Beispiel 11 und Verwendungsbeispiel 5

Nach dem in Beispiel 10 beschriebenen Verfahren wurde ein Photoresist mit folgender Zusammensetzung hergestellt: 91,3 % Polymerisat gemäß Bezugsbeispiel 7, 5,4 % Bis(acetylacetonato)Zn(II) und 3 % Benzildimethylacetal. Dabei reagierte das Polymerisat mit dem Acetylacetonat unter Bildung eines erfindungsgemäßen ionischen Polymerisates aus 59,21 % A, 39,47 % B und 1,32 % C. Nach der in Beispiel 10 angegebenen Verfahrensweise wurde ein Resistmuster hergestellt. Die Belichtungszeiten betrugen 14 Sekunden. Die Auflösung sowie die Ätz- und Galvanikbeständigkeit waren hervorragend.

Beispiel 12 und Verwendungsbeispiel 6

80 % Polymerisat gemäß Bezugsbeispiel 8, 10 % Tripropylenglykoldiacrylat, 3 % Benzildimethylacetal und 7 % Bis(acetylacetonato)Zn(II) wurden wie in Beispiel 8 in Toluol gelöst - dabei reagierte das Polymerisat mit dem Acetylacetonat unter Bildung eines erfindungsgemäßen ionischen Polymerisates aus 88,47 % A, 9,83 % B und 1,70 % C - und zu einem Mehrschichtenelement verarbeitet. Dieses wurde 6 Minuten lang durch ein Negativ hindurchbelichtet und 10 Minuten lang mit wäßrigem Ammoniak (pH = 10) ausgewaschen. Die so erhaltenen Klischees besaßen eine hohe Auflösung und eine vorzügliche Weichheit und Flexibilität.

Beispiel 13 und Verwendungsbeispiel 7

Eine Lösung aus 74 Teilen Polymerisat gemäß Bezugsbeispiel 5, 6 Teilen Bis(acetylacetonato)Zn(II), 10 Teilen Trimethylolpropantriacrylat, 6 Teilen Benzophenon, 2 Teilen Michlers Keton und 1 Teil Viktoriablau (C.I. 44 045) in 200 Teilen Toluol und 700 Teilen Tetrahydrofuran - sie enthielt ein erfindungsgemäßes ionisches Polymerisat aus 68,97 % A, 29,56 % B und 1,47 % C, gebildet durch die Reaktion des Polymerisats mit dem Acetylacetonat - wurde so auf ein elektrochemisch aufgerauhtes und anodisiertes Aluminiumblech für Offsetdruckformen gebracht, daß nach dem Verdampfen des Lösungsmittels und Trocknen der Schicht (Trockendauer: 2 Minuten bei 80 °C) eine Trockenschichtdicke von 1,6 µm resultierte. Die Schicht wurde mit einer 4,5 µm dicken Deckschicht aus Polyvinylalkohol, hergestellt durch Verseifung von Polyvinylacetat (Verseifungsgrad: 98 Mol.%), versehen. Das so hergestellte Mehrschichtenelement wurde in einem offset-typischen Belichter mit einer 3 kW-starken Lampe während 10 Sekunden bildmäßig mit aktinischem Licht bestrahlt und anschließend mit einer wäßrig-alkalischen Lösung mit einem pH-Wert von 11,3 ausgewaschen. Es resultierte eine Offsetdruckform, die eine Auflagenhöhe von 25.000 Drucken ohne die geringste Beschädigung auch an den feinsten Bildelementen (Tonwert 2 %, 60 L/cm) überstand.

Beispiel 14 und Verwendungsbeispiel 8

Es wurde im wesentlichen wie in Beispiel 13 verfahren, nur daß die 10 Teile Tripropylenglykoldiacrylat durch 10 Teile Lösungsmittel ersetzt wurden. Die resultierende Offsetdruckform zeigte die gleichen Eigenschaften, wie die in Beispiel 13 beschriebene. Es war lediglich eine etwas längere Belichtungszeit, als die in Beispiel 13 angegebene, notwendig.

**Patentansprüche**

**1.** Verwendung von ionischen Polymerisaten mit einer polymeren Hauptkette A, einem oder mehreren seitenständigen olefinisch ungesättigten Resten B und einem oder mehreren Kationen C, worin

A) die polymere Hauptkette A' gebildet wird von einem Alkadien-Polmerisat A' eines zahlenmittleren Molgewichts $\overline{M}_n$ von 500 bis 20.000,

B ) die durch 1. Maleinierung und 2. Teilveresterung oder Teilamidierung in A' eingeführten Reste B die Struktur (I) aufweisen,

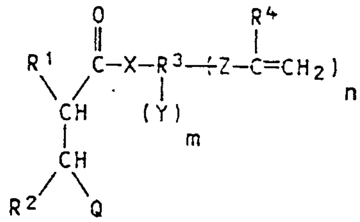 (I)

in denen $R^1$ und $R^2$ verschieden n voneinander r sind und ein Wasserstoffatom oder ein Kohlenstoffatom der Alkadienkette A' darstellen, $R^3$ einen mehrwertigen, geradkettigen oder verzweigten aliphatischen Kohlenwasserstoffrest mit 1 bis 20 C-Atomen, dessen Kette oder Verzweigungen durch Sauerstoff-, Stickstoff-oder Schwefelatome unterbrochen sein können, X ein Sauerstoff-oder Schwefelatom oder eine Aminogruppe, Y eine polare Gruppe, m 0 oder eine ganze Zahl von 1 bis 5, n eine ganze Zahl von 1 bis 3, Z eine Methylen-, Ether-, Amid- oder Estergruppe, $R^4$ ein Wasserstoffatom oder eine Methylgruppe und Q eine Carboxy- oder eine Carboxylatgruppe darstellt,
und
C) die Kationen C Kationen von Elementen der I. bis V. Hauptgruppe, der I. bis VIII. Nebengruppe oder der Lanthanidenreihe des Periodischen Systems der Elemente, von Ammoniak, von mehrfach funktionellen organischen Aminen und/oder von Hydrazin sind,
für die Herstellung von photovernetzbaren Druckplatten, Materplatten, Reliefplatten und Photoresists.

**2.** Verwendung von ionischen Polymerisaten gemäß Anspruch 1, dadurch gekennzeichnet, daß ionische Polymerisate verwendet werden, die zusätzlich einen oder mehrere durch 1. Maleinierung und 2. Teilveresterung oder Teilamidierung in A' eingeführte Reste D der Struktur (II) enthalten,

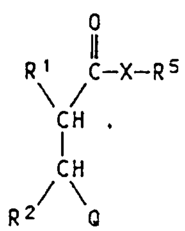 (II)

worin $R^5$ einen mindestens eine ,e freie polare Gruppe enthaltenden, mehrwertigen, geradkettigen oder verzweigten aliphatischen Kohlenwasserstoffrest mit 1 bis 25 C-Atomen, dessen Kette und Verzweigungen durch Sauerstoff-, Stickstoff- oder Schwefelatome unterbrochen sein können, einen $\omega$-Hydroxi-poly(alkylenoxid)-$\alpha$-yl- oder einen $\omega$-Alkyl-poly(alkylenoxid)-$\alpha$-yl-Rest bezeichnet.

**3.** Verwendung von ionischen Polymerisaten mit einer polymeren Hauptkette A, einem oder mehreren seitenständigen olefinisch ungesättigten Resten B und einem oder mehreren Kationen C, worin
A) die polymere Hauptkette A gebildet wird von einem Alkadien-Polymerisat A' eines zahlenmittleren Molgewichts $\overline{M}_n$ von 500 bis 20.000,
B ) die durch 1. Maleinierung und 2. Teilveresterung oder Teilamidierung in A' eingeführten Reste B die Struktur (I) aufweisen,

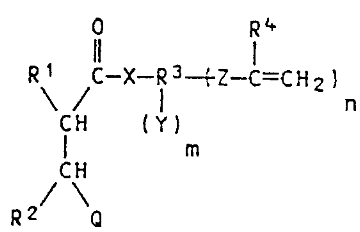 (I)

in denen $R^1$ und $R^2$ verschieden voneinander sind und ein Wasserstoffatom oder ein Kohlenstoffatom der Alkadienkette A' darstellen, $R^3$ einen mehrwertigen, geradkettigen oder verzweigten aliphatischen Kohlenwasserstoffrest mit 1 bis 20 C-Atomen, dessen Kette oder Verzweigungen durch Sauerstoff-, Stickstoff-oder Schwefelatome unterbrochen sein können, X ein Sauerstoff-oder Schwefelatom oder eine Aminogruppe, Y eine polare Gruppe, m 0 oder eine ganze Zahl von 1 bis 5, n eine ganze Zahl von 1 bis 3, Z eine Methylen-, Ether-, Amid- oder Estergruppe, $R^4$ ein Wasserstoffatom oder eine Methylgruppe und 0 eine Carboxy- oder eine Carboxylatgruppe darstellt,

und

C) die Kationen C Kationen von Elementen der I. bis V. Hauptgruppe, der I. bis VIII. Nebengruppe oder der Lanthanidenreihe des Periodischen Systems der Elemente, von Ammoniak, von mehrfach funktionellen organischen Aminen und/oder von Hydrazin sind,

für die Herstellung von photovernetzten Druckformen, Materformen, Reliefformen und Photoresistmustern.

**4.** Verwendung von ionischen Polymerisaten gemäß Anspruch 3, dadurch gekennzeichnet, daß ionische Polymerisate verwendet werden, die zusätzlich einen oder mehrere durch 1 . Maleinierung und 2. Teilveresterung oder Teilamidierung in A' eingeführte Reste D der Struktur (II) enthalten,

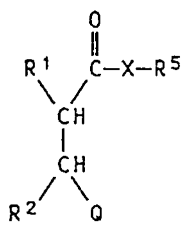

(II)

worin $R^5$ einen mindestens eine freie polare Gruppe enthaltenden, mehrwertigen, geradkettigen oder verzweigten aliphatischen Kohlenwasserstoffrest mit 1 bis 25 C-Atomen, dessen Kette und Verzweigungen durch Sauerstoff-, Stickstoff- oder Schwefelatome unterbrochen sein können, einen $\omega$-Hydroxi-poly(alkylenoxid)-$\alpha$-yl- oder einen $\omega$-Alkyl-poly(alkylenoxid)-$\alpha$-yl-Rest bezeichnet.

## Claims

**1.** The use of an ionic polymer having a polymer main chain A, one or more olefinically unsaturated side radicals B and one or more cations C, wherein

A) the polymer main chain A is formed from an alkadiene polymer A' having a number average molecular weight $\overline{M}_n$ of from 500 to 20,000,

B) the radicals B which are introduced into A' by 1. maleation and 2. partial esterification or partial amidation have the structure (I)

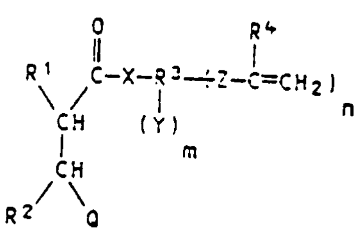

(I)

where $R^1$ and $R^2$ differ from one another and are each hydrogen or a carbon atom of the alkadiene chain A', $R^3$ is a polyvalent, straight-chain or branched aliphatic hydrocarbon radical of 1 to 20 carbon atoms, whose chain or branches may be interrupted by oxygen, nitrogen or sulfur, X is oxygen, sulfur or amino, Y is a polar group, m is 0 or an integer from 1 to 5, n is an integer from 1 to 3, z is a methylene, ether, amide or ester group, $R^4$ is hydrogen or methyl, and Q is carboxyl or carboxylate,

and

C) the cations C are cations of elements of main groups I to V, of subgroups I to VIII or of the lanthanide series of the periodic table of elements, of ammonia, of polyfunctional organic amines and/or of hydrazine,

for the preparation of photocrosslinkable printing plates, pattern plates, relief plates and photoresists.

**2.** The use of an ionic polymer as claimed in claim 1, which comprises using an ionic polymer which additionally contains one or more radicals D which have been introduced into A' by 1. maleation and 2. partial esterification or partial amidation and are of the structure (II)

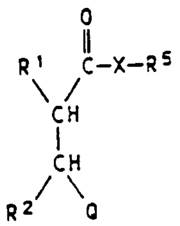

(II)

where $R^5$ is a polyvalent, straight-chain or branched aliphatic hydrocarbon radical of 1 to 25 carbon atoms which contains one or more free polar groups and whose chain and branches may be interrupted by oxygen, nitrogen or sulfur, or is an $\omega$-hydroxypoly-(alkylene oxide)-$\alpha$-yl or $\omega$-alkylpoly(alkylene oxide)-$\alpha$-yl radical.

**3.** The use of an ionic polymer having a polymer main chain A, one or more olefinically unsaturated side radicals B and one or more cations C, wherein

A) the polymer main chain A is formed from an alkadiene polymer A' having a number average molecular weight $\overline{M}_n$ of from 500 to 20,000,

B) the radicals B which are introduced into A' by 1. maleation and 2. partial esterification or partial amidation have the structure (I)

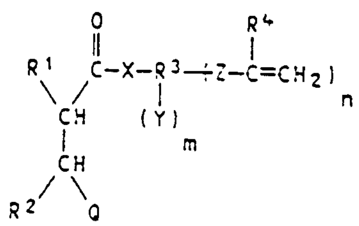

(I)

where $R^1$ and $R^2$ differ from one another and are each hydrogen or a carbon atom of the alkadiene chain A', $R^3$ is a polyvalent, straight-chain or branched aliphatic hydrocarbon radical of 1 to 20 carbon atoms, whose chain or branches may be interrupted by oxygen, nitrogen or sulfur, X is oxygen, sulfur or amino, Y is a polar group, m is 0 or an integer from 1 to 5, n is an integer from 1 to 3, Z is a methylene, ether, amide or ester group, $R^4$ is hydrogen or methyl, and Q is carboxyl or carboxylate,

and

C) the cations C are cations of elements of main groups I to V, of subgroups I to VIII or of the lanthanide series of the periodic table of elements, of ammonia, of polyfunctional organic amines and/or of hydrazine,

for the preparation of photocrosslinked printing plates, pattern plates, relief plates and photoresist images.

**4.** The use of an ionic polymer as claimed in claim 3, which comprises using an ionic polymer which additionally contains one or more radicals D which have been introduced into A' by 1. maleation and 2. partial esterification or partial amidation and are of the structure (II)

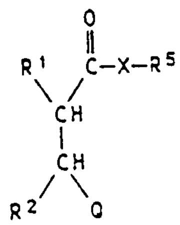

(II)

where $R^5$ is a polyvalent, straight-chain or branched aliphatic hydrocarbon radical of 1 to 25 carbon atoms which contains one or more free polar groups and whose chain and branches may be interrupted by oxygen, nitrogen or sulfur, or is an ω-hydroxypoly-(alkylene oxide)-α-yl or ω-alkylpoly-(alkylene oxide)-α-yl radical.

## Revendications

1. Utilisation de polymérisats ioniques à chaîne principale polymère A, un ou plusieurs restes latéraux B à insaturation oléfinique et un ou plusieurs cations C, dans lesquels
   A) la chaîne principale polymère A est formée par un polymérisat d'alcadiène A' d'une moyenne en nombre du poids moléculaire $M_n$ de 500 à 20 000,
   b) les restes B introduits dans A' 1) par modification à l'acide maléique et 2) par estérification partielle ou amination partielle, présentent la structure (I)

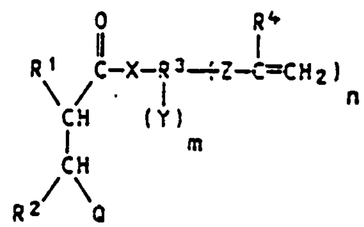

(I)

   où $R^1$ et $R^2$ sont différents l'un de l'autre et représentent un atome d'hydrogène ou un atome de carbone de la chaîne d'alcadiène A', $R^3$ représente un reste d'hydrocarbure aliphatique polyvalent, linéaire ou ramifié, de 1 à 20 atomes de carbone, dont la chaîne ou les ramifications peuvent être interrompues par des atomes d'oxygène, d'azote ou de soufre, X représente un atome d'oxygène ou de soufre ou un groupe amino, Y un groupe polaire, m = 0 ou un nombre entier de 1 à 5, n est un nombre entier de 1 à 3, Z représente un groupe méthylène, éther, amide ou ester, $R^4$ est un atome d'hydrogène ou un groupe méthyle et Q un groupe carboxy ou carboxylate, et
   c) les cations C sont des cations d'éléments des 1er au Ve groupes principaux, des 1er au VIIIe groupes secondaires ou de la série des lanthanides du tableau périodique des éléments, de l'ammoniac, d'amines organiques polyfonctionnels et/ou d'hydrazine,
   pour la confection de clichés photoréticulables, matrices, plaques à reliefs et réserves anti-acide.

2. Utilisation de polymérisats ioniques selon la revendication 1, caractérisée par le fait que l'on utilise des polymérisats ioniques qui contiennent additionnellement un ou plusieurs restes D introduits dans A' 1) par modification à l'aide maléique et 2) par estérification partielle ou amination partielle, de structure (II)

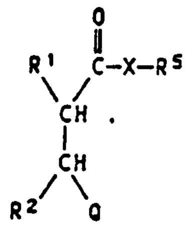

(II)

dans laquelle $R^5$ représente un reste d'hydrocarbure aliphatique polyvalent, linéaire ou ramifié, de 1 à 25 atomes C, contenant au moins un groupe polaire libre dont la chaîne et les ramifications peuvent être interrompues par des atomes d'oxygène, d'azote ou de soufre, un reste $\omega$-hydroxy-poly-(alkylènoxyde)-$\alpha$-yle ou un reste $\omega$-alkyl-poly(alkylènoxyde)-$\alpha$-yle.

3. Utilisation de polymérisats ioniques à chaîne principale polymère A, un ou plusieurs restes B latéraux à insaturation oléfinique, et un ou plusieurs cations C, dans lesquels

A) la chaîne principale polymère A est formée par un polymérisat d'alcadiène A' d'une moyenne en nombre du poids moléculaires $M_n$ de 500 à 20 000,

b) les restes a introduits dans A' 1) par modification à l'acide maléique et 2) par estérification partielle ou amination partielle, présentent la structure (I)

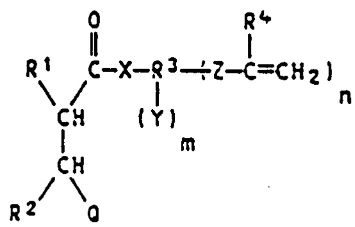

(I)

où $R^1$ et $R^2$ sont différents l'un de l'autre et représentent un atome d'hydrogène ou un atome de carbone de la chaîne d'alcadiène A', $R^3$ représente un reste d'hydrocarbure aliphatique polyvalent, linéaire ou ramifié, de 1 à 20 atomes de carbone, dont la chaîne ou les ramifications peuvent être interrompues par des atomes d'oxygène, d'azote ou de soufre, X représente un atome d'oxygène ou de soufre ou un groupe amino, Y un groupe polaire, m = 0 ou un nombre entier de 1 à 5, n est un nombre entier de 1 à 3, Z représente un groupe méthylène, éther, amide ou ester, $R^4$ est un atome d'hydrogène ou un groupe méthyle et Q un groupe carboxy ou carboxylate, et

c) les cations C sont des cations d'éléments des 1er au Ve groupes principaux, des 1er au VIIIe groupes secondaires ou de la série des lanthanides du tableau périodique des éléments, de l'ammoniac, d'amines organiques polyfonctionnels et/ou d'hydrazine,

pour la confection de clichés photoréticulables, matrices, plaques à reliefs et réserves anti-acide.

4. Utilisation de polymérisats ioniques selon la revendication 3, caractérisée par le fait que l'on utilise des polymérisats ioniques qui contiennent additionnellement un ou plusieurs restes D introduits dans A' 1) par modification à l'aide maléique et 2) par estérification partielle ou amination partielle, de structure (II)

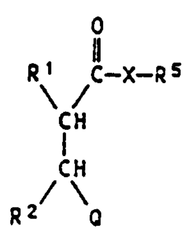

(II)

dans laquelle $R^5$ représente un reste d'hydrocarbure aliphatique polyvalent, linéaire ou ramifié, de 1 à 25 atomes C, contenant au moins un groupe polaire libre dont la chaîne et les ramifications peuvent être interrompues par des atomes d'oxygène, d'azote ou de soufre, un reste ω-hydroxy-poly-(alkylènoxyde)-α-yle ou un reste ω-alkyl-poly(alkylènoxyde)-α-yle.